# EUROPEAN PATENT APPLICATION

(11) **EP 3 229 191 A1**
(43) Date of publication of application: **11.10.2017**
(21) Application number: 15865218.0
(22) Date of filing: 14.10.2015
(51) Int. Cl.: G06Q 20/20, G06Q 20/32, G06Q 20/38

(54) **BANK CARD TRANSFER PAYMENT METHOD**

(30) Priority: 04.12.2014 CN 201410736624
(71) Applicant: Hierstar (Suzhou)., LTD., Suzhou, Jiangsu 215200 (CN)
(72) Inventor: LIU, Guo, Suzhou Jiangsu 215200 (CN); ZHANG, Zheng, Suzhou Jiangsu 215200 (CN); BAO, Wenbin, Suzhou Jiangsu 215200 (CN)
(74) Representative: Cabinet Bleger-Rhein-Poupon
(86) International application number: PCT/CN2015/091914
(87) International publication number: WO 2016/086723

(57) **Abstract**

A bank card transfer payment method, and the method is characterized by comprising: connecting a first terminal to a first device via a first wireless interface; connecting a second terminal to a second device via a second wireless interface; the first terminal acquiring account information about a payment account, and the second terminal acquiring account information about a payee account and sending the account information about the payee account to the first terminal; the first terminal receiving a transfer instruction input by a first user; generating transaction information according to the transfer instruction, and sending the transaction information to the first device; the first device displaying the transaction information to the first user; receiving a confirmation instruction input by the first user; deducting a corresponding amount in the payment account according to the transfer amount, generating a signature information according to the transaction information, and sending the signature information to the first terminal; the first terminal receiving the signature information, and forwarding the signature information to the second terminal; the second terminal sending the signature information to the second device; the second device verifying the signature information; and adding the corresponding amount to the payee account when the verification succeeds.

## Description

### Technical Field of the Invention

The present disclosure relates to the field of electronic transactions, particularly to a bank card transfer payment method.

### Background of the Invention

The present disclosure relates to the field of electronic transactions, and at present, the bank card transfer is mainly handled via a background account of the back system bound with the bank card. After the bank card transfer, if it wants to promptly notify the user that the transfer transaction is successful, and that the transfer amount has arrived at the user's bank account, it requires the bank of the user's bank card to support real-time transfer, and the user's bank card to turn on a reminder function for the transfer. Moreover, the above transfer transaction process is handled through the third-party trading platform, and cannot be real-time offline transferred.

### Summary of the Invention

The present disclosure is aimed at implementing a rapid, convenient transfer payment between the bank card accounts of users via terminal devices of the users without a third party transaction platform, or implementing a transfer payment directly through the bank card of the user.

In the first aspect, the present disclosure provides a bank card transfer payment method, and the method comprising:
connecting a first terminal to a first device via a first wireless interface; connecting a second terminal to a second device via a second wireless interface; wherein, the first device comprises account information about a payment account, and the second terminal comprises account information about a payee account;
acquiring the account information about the payment account via the first terminal, acquiring the account information about the payee account via the second terminal, and sending the account information about the payee account to the first terminal;
receiving a transfer instruction input by a first user via the first terminal; the transfer instruction comprises a transfer amount to be transferred to the payee account;
generating transaction information according to the transfer instruction via the first terminal, and sending the transaction information to the first device; the transaction information comprises the account information about the payee account and the transfer amount;
displaying the transaction information to the first user via the first device;
receiving a confirmation instruction input by the first user according to the displayed transaction information;
deducting a corresponding amount in the payment account according to the transfer amount via the first device, and generating a signature information according to the transaction information and sending the signature information to the first terminal via the first device;
receiving the signature information via the first terminal, and forwarding the signature information to the second terminal;
sending the signature information to the second device via the second terminal;
verifying the signature information via the second device;
adding the corresponding amount to the payee account when the verification succeeds.

Preferably, the method further comprising: after deducting the corresponding amount in the payment account according to the transfer amount via the first device, and generating the signature information according to the transaction information and sending the signature information to the first terminal via the first device, forwarding the signature information to a first server via the first terminal;
verifying the signature information via the first server;
generating a credit for load instruction information about a second user according to the signature information via the first server, and sending the credit for load instruction information to the first terminal, when the verification succeeds;
forwarding the received credit for load instruction information to the second terminal via the first terminal;
receiving the credit for load instruction information and forwarding the credit for load instruction information to the second device via the second terminal;
adding the corresponding amount to the payee account according to the credit for load instruction information via the second device.

Preferably, the method further comprises: after receiving the signature information via the first terminal, and forwarding the signature information to the second terminal,
sending the signature information to a second server via the second terminal;
verifying the signature information via the second server;

adding the corresponding amount to the payee account according to the signature information via the second server, when the verification succeeds.

Preferably, the method further comprises: generating a transaction completion information via the second device, sending the transaction completion information to the second terminal, and displaying the transaction completion information to the second user via the second terminal.

In the second aspect, the present disclosure provides a bank card transfer payment handling system,
the system comprises: a first terminal, a second terminal, a first device, and a second device;
the first terminal is used for connecting to the first device via a first wireless interface, wherein, the first device comprises account information about a payment account; and for acquiring the account information about the payment account;
the second terminal is used for connecting to the second device via a second wireless interface, wherein, the second device comprises account information about a payee account; and for acquiring the account information about the payee account, and sending the account information about the payee account to the first terminal;
the first terminal further is used for receiving a transfer instruction input by a user, the transfer instruction comprising a transfer amount to be transferred to the payee account; for generating transaction information according to the transfer instruction and sending the transaction information to the first device, the transaction information comprising the account information about the payee account and the transfer amount;
the first device is used for displaying the transaction information to the first user; for receiving a confirmation instruction input by the first user according to the displayed transaction information; for deducting a corresponding amount in the payment account according to the transfer amount, and for generating a signature information according to the transaction information and send the signature information to the first terminal;
the first terminal further is used for receiving the signature information, and forwarding the signature information to the second terminal;
the second terminal further is used for sending the signature information to the second device;
the second device is used for verifying the signature information; and adding the corresponding amount to the payee account when the verification succeeds.

Preferably, the system further comprises: a first server, which is used for receiving the signature information forwarded by the first terminal after the first device deducting the corresponding amount in the payment account according to the transfer amount, and generating the signature information according to the transaction information and sending the signature information to the first terminal; for verifying the signature information; for generating credit for load instruction information about a second user according to the signature information, and sending the credit for load instruction information to the first terminal, when the verification succeeds;
the first terminal further is used for forwarding the received credit for load instruction information to the second terminal;
the second terminal further is used for receiving the credit for load instruction information and forwarding the credit for load instruction information to the second device;

the second device further is used for adding the corresponding amount to the payee account according to the credit for load instruction information.

Preferably, the system further comprises: a second server, which is used for receiving the signature information sent by the second terminal after the first terminal receiving the signature information and forwarding the signature information to the second terminal; for verifying the signature information; for adding the corresponding amount to the payee account according to the signature information, when the verification succeeds.

Preferably, the second device further is used for generating a transaction completion information, sending the transaction completion information to the second terminal, and displaying the transaction completion information to a second user via the second terminal.

In the third aspect, the present disclosure provides another bank card transfer payment handling method, and the method comprises:
connecting a first device to a second device via a wireless interface; wherein, the first device comprises account information about a payment account, and the second device comprises account information about a payee account;
receiving a transfer instruction input by a first user via the first device; the transfer instruction comprises a transfer amount to be transferred to the payee account;
sending the account information about the payee account to the first device via the second device;
generating transaction information according to the transfer instruction via the first device, and displaying the transaction information to the first user; the transaction information comprises the account information about the payee account and the transfer amount;
receiving, via the first device, a confirmation instruction input by the first user according to the displayed transaction information;
deducting a corresponding amount in the payment account according to the transfer amount via the first device, and generating a signature information; the signature information comprises the transfer amount;
sending the signature information to the second device via the first device;
adding the corresponding amount to the payee account according to the signature information via the second device.

Preferably, the method further comprising: generating a transaction completion information via the second device, and displaying the transaction completion information to a second user.

In the fourth aspect, the present disclosure provides another bank card transfer payment handling system,
the system comprising: a first device and a second device;
the first device is used for connecting to the second device via a wireless interface; wherein, the first device comprises account information about a payment account, and the second terminal comprises account information about a payee account;
the first device is further used for receiving a transfer instruction input by a first user; the transfer instruction comprises a transfer amount to be transferred to the payee account;
the second device is further used for sending the account information about the payee account to the first device;
the first device is further used for generating transaction information according to the transfer instruction, and displaying the transaction information to the first user; the transaction information comprises the account information about the payee account and the transfer amount;
the first device is further used for receiving a confirmation instruction input by the first user according to the displayed transaction information; deducting a corresponding amount in the payment account according to the transfer amount, and generating a signature information; the signature information comprises the transfer amount;
the first device is further used for sending the signature information to the second device;
the second device is further used for adding the corresponding amount to the payee account according to the signature information.

Preferably, the second device is specifically used for generating a transaction completion information, and displaying the transaction completion information to a second user.

The bank card transfer payment method provided by the present disclosure, does not need the support of a third party payment platform, and can implement a transfer transaction between a bank card account of a user and other bank card account directly via a terminal device of the user, or implement a transfer transaction directly between the bank card accounts, which results in a more convenient and rapid transaction.

### Brief Description of the Drawings

Fig. 1 is a flow chart of a bank card transfer payment method provided by Embodiment 1 of the present disclosure;
Fig. 2 is a schematic diagram of a bank card transfer payment system provided by Embodiment 2 of the present disclosure;
Fig. 3 is a flow chart of another bank card transfer payment method provided by Embodiment 3 of the present disclosure;
Fig. 4 is a schematic diagram of another bank card transfer payment system provided by Embodiment 4 of the present disclosure.

### Detailed Description of the Exemplary Embodiments

In the following, the technical scheme of the present disclosure is further described in detail in reference to the accompanying drawings and embodiments.

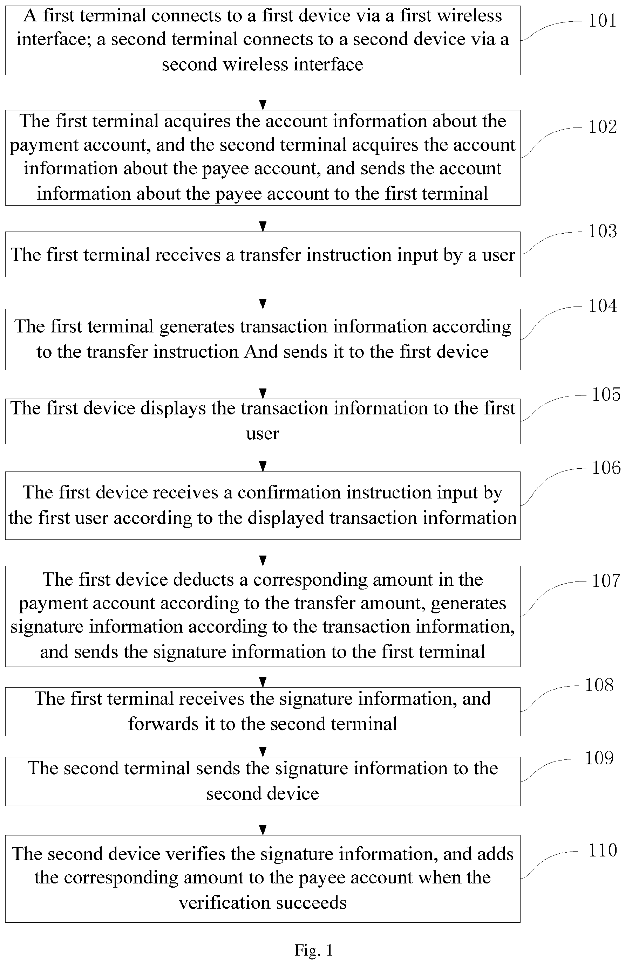

Fig. 1 is a flow chart of a bank card transfer payment method provided by Embodiment 1 of the present disclosure, as shown in Fig. 1, this embodiment of the present disclosure comprises the following steps:
In Step 101, a first terminal connects to a first device via a first wireless interface; a second terminal connects to a second device via a second wireless interface;

Specifically, the first wireless interface may be a Bluetooth interface or a Near Field Communication (NFC) interface, and the second interface may be a Bluetooth interface or a NFC interface.

In this embodiment, the first device comprises account information about a payment account, and the second terminal comprises account information about a payee account.

In a specific example, the first terminal connects to the first device in a Bluetooth communication manner, and the second terminal connects to the second device in a NFC interface communication manner.

The first terminal pages the first device in a frequency hopping manner, and the first device scans external paging at intervals, and responses to the first terminal when the first terminal (the external paging) is scanned, and then a connection, i.e., Asynchronous Connectionless (ACL) is built between the first terminal and the first device.

NFC is applied in short range communication, and thus, the second terminal can connect to the second device only in a "touch" manner.

In Step 102, the first terminal acquires the account information about the payment account, the second terminal acquires the account information about the payee account, and sends the account information about the payee account to the first terminal.

Specifically, the first terminal acquires the account information about the payment account stored in the first device by means of Bluetooth function, wherein the account information about the payment account may include the name and the account number of the payment account, etc.; the second terminal connects the second device by means of NFC, acquires the account information about the payee account stored in the second device, wherein the account information about the payee account may include the name and the account number of the payee account, etc., and sends the account information about the payee account to the first terminal.

In Step 103, the first terminal receives a transfer instruction input by a user.

Specifically, the user selects a transfer function in the first terminal, and inputs a transfer instruction, and the first terminal receives the transfer instruction input by the user; wherein, the transfer instruction comprises a transfer amount to be transferred to the payee account.

In Step 104, the first terminal generates transaction information according to the transfer instruction.

Specifically, after the first terminal receiving the transfer instruction, the fist terminal generates the transaction information internally according to the account information about the payee account and the transfer account, etc., and sends the transaction information to the first device by means of Bluetooth.

In Step 105, the first device displays the transaction information to the first user.

In Step 106, the first device receives a confirmation instruction input by the first user according to the displayed transaction information.

Specifically, the first device displays the transaction information to the first user via a display, the first user confirms the displayed transaction information, and when it is confirmed to be correct, the first user inputs confirmation instruction into the first device; and when it is confirmed to be wrong, the transaction is terminated.

In Step 107, the first device deducts a corresponding amount in the payment account according to the transfer amount, generates signature information according to the transaction information, and sends the signature information to the first terminal.

Specifically, after the first device receiving the confirmation instruction input by the first user, the first device deducts an electronic amount corresponding to the transfer amount in the electronic balance of the payment account; the first device generates transaction record, and at the same time, generates signature information according to the transaction information, and sends the signature information to the first terminal.

In Step 108, the first terminal receives the signature information, and forwards it to the second terminal.

Specifically, the first terminal connects to the second terminal by means of Bluetooth pairing, and sends the signature information to the second terminal by means of Bluetooth after receiving the signature information sent by the first device.

Moreover, in a specific example, after the first device deducting the corresponding amount in the payment account according to the transfer amount, and generating the signature information according to the transaction information and sending the signature information to the first terminal, the first terminal connects to a first server by means of communication network and forwards the signature information to the first server, and the first server is a server of the background electronic account of the payment account. The first server verifies the signature information, wherein, the signature information is a digital signature based on Public Key Infrastructure (PKI), and the first server may verify the signature information according to the internally stored digital certificate; or, when the signature information is a dynamic signature, the first server compares the signature information with the internally stored dynamic signature, and the verification succeeds when the signature information is the same with the internally stored dynamic signature, and if not, the verification fails.

When the verification fails, the transaction terminates, and verification failure information is returned to the first terminal; when the verification succeeds, the first server sends the verification success information to the first terminal, and at the same time, the first device generates credit for load instruction information according to the signature information, and sends the credit for load instruction information to the first terminal, the first terminal forwards the received credit for load instruction information to the second terminal, the second terminal forwards the received credit for load instruction information to the second device, and the second device adds the corresponding amount to the payee account according to the credit for load instruction information. The second device returns transaction completion information to the second terminal.

In another specific example, after the first device deducting the corresponding amount in the payment account according to the transfer amount, and generating the signature information according to the transaction information and sending the signature information to the first terminal, the first terminal connects to a first server by means of communication network and forwards the signature information to the first server, the first server verifies the signature information, the signature information also can be a PKI based digital signature, or a dynamic signature, and the process of the signature verification is similar to the above-mentioned verification process of the signature information, and is not repeated here. When the verification fails, verification failure information is returned to the first terminal; when the verification succeeds, the first server transfers the corresponding electronic amount to the payee account according to the transaction amount in the signature information; further, the first server sends verification success or failure information to the first terminal, the first terminal forwards the verification success or failure information to the second terminal, the second terminal forwards it to the second device, and the second device verifies the verification success or failure information and forwards the verification result to the second terminal.

In Step 109, the second terminal sends the signature information to the second device.

Specifically, the second terminal connects to the second device by means of NFC, and sends the signature information to the second device by means of NFC.

Moreover, in a specific example, after the first terminal receives the signature information sent by the first device and forwards it to the second terminal, the second terminal also connects to a second server by means of communication network and forwards the signature information to the second server; the second server is a server of the background electronic cash account of the payee account. The second server verifies the signature information, wherein, the signature information also can be a PKI based digital signature, or a dynamic signature, and the process of the signature verification is similar to the above-mentioned verification process of the signature information in Step 108, and is not repeated here.

When the verification succeeds, the corresponding electronic amount is added to the electronic cash balance of the payee account according to the transfer amount in the signature information, and the transaction completion information is returned to the second terminal. When the verification fails, the transaction terminates, and the transaction failure information is sent to the second terminal.

In Step 110, the second device verifies the signature information, and adds the corresponding amount to the payee account when the verification succeeds.

In a specific example, the signature information also can be a PKI based digital signature, or a dynamic signature, and the process of the signature verification is similar to the above-mentioned verification process of the signature information in Step 108, and is not repeated here.

When the verification succeeds, the second device adds the corresponding amount to the electronic cash balance of the payee account according to the signature information, and the second device generates the transaction record. At the same time, the second device generates transaction completion information, and sends the transaction completion information to the second terminal to display the transaction completion information to a second user; when the verification fails, the transaction terminates, and transaction failure information is sent to the second terminal, to display it to the second user by the second terminal.

The bank card transfer payment method provided by the present embodiment, can implement a transfer transaction between a bank card account of a user and other bank card account via terminal devices of the users, not by means of a third party payment platform, which enables a more convenient and rapid transaction; in addition, the bank card itself has a display function, and the user can timely know the transaction success or failure condition in the case that the bank card of the user does not turn on the arrival reminder function.

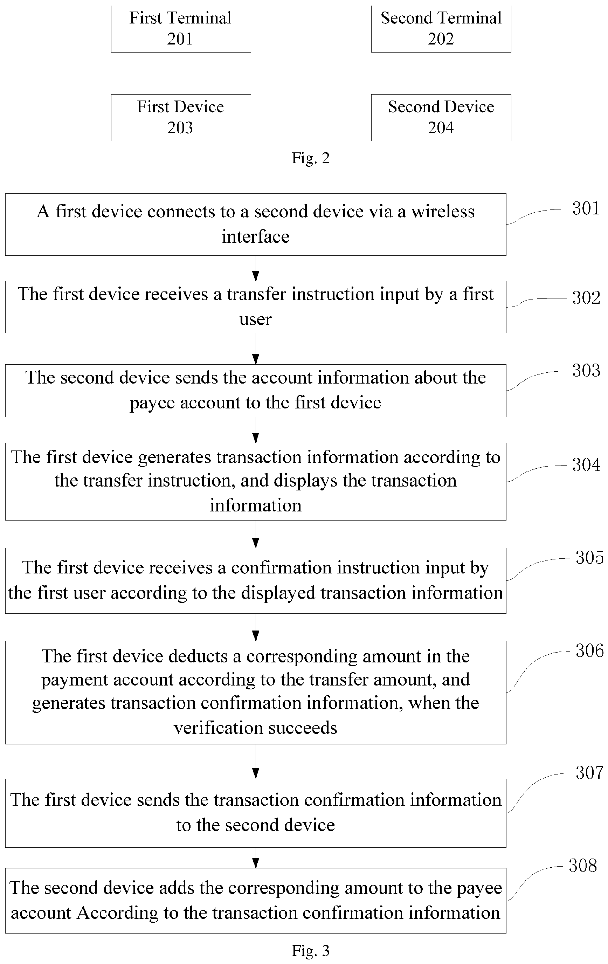

Fig. 2 is a schematic diagram of a bank card transfer payment system provided by Embodiment 2 of the present disclosure, and the system comprises: a first terminal 201, a second terminal 202, a first device 203, and a second device 204.

Specifically, the first terminal 201 connects to the first device 203 via a first wireless interface, wherein, the first device 203 comprises account information about a payment account, and, the first terminal 201 acquires the account information about the payment account.

The second terminal 202 connects to the second device 204 via a second wireless interface, wherein, the second device 204 comprises account information about a payee account, and, the second terminal 204 acquires the account information about the payee account. Further, the second terminal 204 sends the account information about the payee account to the first terminal 201.

The first terminal 201 receives a transfer instruction input by a user, wherein the transfer instruction comprises a transfer amount to be transferred to the payee account; the first terminal 201 generates transaction information according to the transfer instruction and sends the transaction information to the first device 203, wherein the transaction information comprises the account information about the payee account and the transfer amount.

The first device 203 displays the transaction information to the first user, and receives a confirmation instruction input by the first user according to the displayed transaction information; the first device 203 deducts a corresponding amount in the payment account according to the transfer amount, and generates transaction record; at the same time, the fist device 203 generates a signature information according to the transaction information and sends the signature information to the first terminal 201.

The first terminal 201 receives the signature information, and forwards it to the second terminal 202.

In a specific embodiment, the first terminal 201 may be a terminal device, such as a mobile phone, a tablet computer, or a desktop computer, etc..

The second terminal 202 may be a terminal device, such as a mobile phone, a tablet computer, or a desktop computer, etc..

The first device 203 may be a smart financial card with display function and key operation, and the like, generally, the account holder of the first device 203 is the holder of the first terminal 201, i.e. the first user.

The second device 204 may be a smart financial card with display function and key operation, and the like, generally, the account holder of the second device 204 is the holder of the second terminal 201, i.e. the second user.

Optionally, the system further comprises a first server 205, and in a specific example, after the first device 203 deducting the corresponding amount in the payment account according to the transfer amount, generating the signature information according to the transaction information, and sending the signature information to the first terminal 201, the first terminal 201 receives the signature information and forwards it to the first server 205. The first server 205 receives the signature information forwarded by the first terminal 201, and verifies the signature information, wherein, the signature information is a digital signature based on Public Key Infrastructure (PKI), and the first server 205 may verify the signature information according to the internally stored digital certificate; or, when the signature information is a dynamic signature, the first server 205 compares the signature information with the internally stored dynamic signature, and the verification succeeds when the signature information is the same with the internally stored dynamic signature, and if not, the verification fails.

When the verification fails, the transaction terminates, and verification failure information is returned to the first terminal 201; when the verification succeeds, the first server 205 sends the verification success information to the first terminal 201, and at the same time, generates credit for load instruction information according to the signature information, and sends the credit for load instruction information to the first terminal 201, the first terminal 201 further forwards the received credit for load instruction information to the second terminal 202, the second terminal 202 further receives the credit for load instruction information and forwards it to the second device 204, and the second device 204 further adds the corresponding amount to the payee account according to the credit for load instruction information, and returns transaction completion information to the second terminal 202.

In another specific example, after the first device 203 deducting the corresponding amount in the payment account according to the transfer amount, generating the signature information according to the transaction information, and sending the signature information to the first terminal 201, the first terminal 201 connects to a first server 205 by means of communication network and forwards the signature information to the first server 205, the first server 205 verifies the signature information, the signature information also can be a PKI based digital signature, or a dynamic signature, and the process of the signature verification is similar to the above-mentioned verification process of the signature information, and is not repeated here. When the verification fails, verification failure information is returned to the first terminal 201; when the verification succeeds, the first server 205 transfers the corresponding electronic amount to the payee account according to the transaction amount in the signature information; further, the first server 205 sends verification success information to the first terminal 201. The first terminal 201 forwards the verification success or failure information to the second terminal 202, the second terminal 202 forwards it to the second device 204, and the second device 204 checks the verification success or failure information and forwards the checking result to the second terminal 202.

The second terminal 202 sends the signature information to the second device 204.

Optionally, in a specific example, the system further comprises a second server 206, and the second terminal 202 also connects to the second server 206 by means of communication network; and after the first terminal 201 receiving the signature information sent by the first device 203 and forwarding it to the second terminal 202, the second terminal 202 forwards the signature information to the second server 206, and the second server 206 is a server of the background electronic cash account of the payee account. The second server verifies the signature information, wherein, the signature information also can be a PKI based digital signature, or a dynamic signature, and the process of the signature verification is similar to the above-mentioned verification process of the signature information, and is not repeated here.

When the verification succeeds, the corresponding amount is added to the payee account according to the signature information, and the transaction completion information is returned to the second terminal; when the verification fails, the transaction terminates, and the transaction failure information is sent to the second terminal.

The second device 204 verifies the signature information, and the signature information is a PKI based digital signature, or a dynamic signature, and the specific verification process is similar to the above-mentioned verification process of the signature information, and is not repeated here. When the verification succeeds, the second device 204 adds the corresponding electronic amount to the electronic cash balance of the payee account according to the signature information, and the second device 204 generates the transaction record, and generates the transaction completion information at the same time. The second device 204 sends the transaction completion information to the second terminal 202 to display the transaction completion information to a second user by the second terminal 202; when the verification fails, the transaction terminates, and transaction failure information is sent to the second terminal 202, to display it to the second user by the second terminal 202.

The bank card transfer payment system provided by the present embodiment, does not need the support of a third party payment platform, and can implement a transfer transaction between a bank card account of a user and other bank card account directly via terminal devices of the users, which enables a more convenient and rapid transaction. In addition, the bank card itself has a display function, and the user can timely know the transaction success or failure condition in the case that the bank card of the user does not turn on the arrival reminder function.

Fig. 3 is a flow chart of another bank card transfer payment method provided by Embodiment 3 of the present disclosure, as shown in Fig. 3, this embodiment of the present disclosure comprises the following steps:
In Step 301, a first device connects to a second device via a wireless interface.

In a specific example, the first device connects to the second device connects via a wireless interface in a Bluetooth communication manner; specifically, the first device pages the second device in a frequency hopping manner, and the second device scans external paging at intervals, and responses to the first device when the first device (the external paging) is scanned, and then a connection, i.e., Asynchronous Connectionless (ACL) is built between the first device and the second device; wherein, the first device comprises account information about a payment account, and the second device comprises account information about a payee account; moreover, the account information about the payment account may include the name and the account number of the payment account, etc., and the account information about the payee account may include the name and the account number of the payee account, etc..

In Step 302, the first device receives a transfer instruction input by a first user.

Specifically, the first user selects a transfer function in the first device, and inputs a transfer instruction, and the first device receives the transfer instruction input by the first user, wherein, the transfer instruction comprises a transfer amount to be transferred to the payee account.

In Step 303, the second device sends the account information about the payee account to the first device.

Specifically, the second device sends the account information about the payee account internally stored to the first device by means of Bluetooth communication.

In Step 304, the first device generates transaction information according to the transfer instruction, and displays the transaction information to the first user.

After receiving the transfer instruction, the first device internally generates the transaction information according to the account information about the payee account and the transfer account, etc., and displays the transaction information, so that the first user can check the exactitude of the transaction information.

In Step 305, the first device receives a confirmation instruction input by the first user according to the displayed transaction information.

Specifically, the first user confirms the displayed transaction information, and when it is confirmed to be correct, the first user inputs confirmation information into the first device, and the first device verifies the transaction information according to the received confirmation instruction; and when it is confirmed to be wrong, the transaction is terminated.

In Step 306, the first device deducts a corresponding amount in the payment account according to the transfer amount, and generates signature information.

Specifically, the first device deducts an electronic amount corresponding to the transfer amount in the electronic balance of the payment account; the first device generates transaction record, and at the same time, generates signature information, wherein, the signature information comprises the transfer amount.

In Step 307, the first device sends the signature information to the second device.

Specifically, the first device sends the signature information to the second device by means of Bluetooth communication.

In Step 308, the second device verifies the signature information, and adds the corresponding amount to the payee account.

Specifically, the second device acquires the transfer amount from the signature information, and then adds the corresponding amount to the electronic cash balance of the payee account, and the second device generates the transaction record. At the same time, the second device generates transaction completion information and displays the transaction completion information to a second user. Wherein, the signature information includes the transfer amount.

The bank card transfer payment method provided by the present embodiment, can implement a transfer between a bank card and other bank card, not by means of a third party payment platform, which enables a more convenient and rapid transaction; in addition, the bank card itself has a display function, and the user can timely know the transaction success or failure condition in the case that the bank card of the user does not turn on the arrival reminder function.

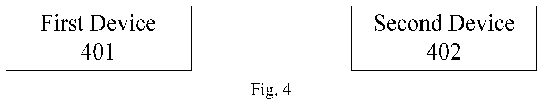

Fig. 4 is a schematic diagram of another bank card transfer payment system provided by Embodiment 4 of the present disclosure, and the system comprises: a first device 401 and a second device 402.

Specifically, a first device 401 connects to a second device 402 by means of a wireless interface in Bluetooth communication manner; wherein, the first device comprises account information about a payment account, and the second terminal comprises account information about a payee account.

The first user selects the transfer function on the first device, and inputs a transfer instruction, and the second device 402 sends the account information about the payee account to the first device. The first device 401 receives the transfer instruction, wherein the transfer instruction comprises a transfer amount to be transferred to the payee account. After receiving the transfer instruction, the first device 401 internally generates transaction information according to the account information about the payee account and the transfer amount, etc., and the first device 401 displays the transaction information, and the first user confirms the displayed transaction information, and when it is confirmed to be correct, the first user inputs confirmation instruction into the first device 401, and the first device 401 verifies the transaction information according to the received confirmation instruction; and when it is confirmed to be wrong, the transaction is terminated. The first device 401 sends the signature information to the second device 402, and the second device 204 acquires the transfer amount from the signature information sent by the first device, adds the corresponding amount to the electronic balance of the payee account, and internally generates the transaction record, and at the same time, generates the transaction completion information to display it to a second user. Wherein, the signature information includes the transfer amount.

In a specific embodiment, the first device 401 may be a smart financial card with display function and key operation, and the like; and the second device 402 may also be a smart financial card with display function and key operation, and the like.

The bank card transfer payment system provided by the present embodiment, does not need the support of a third party payment platform, and can implement a transfer transaction directly between a bank card and other bank card, which enables a more convenient and rapid transaction. In addition, the bank card itself has a display function, and the user can timely know the transaction success or failure condition in the case that the bank card of the user does not turn on the arrival reminder function.

The skilled person should also be further aware that the elements and algorithm steps of the various examples described in connection with the embodiments disclosed herein can be implemented in electronic hardware, computer software, or a combination thereof, in order to clearly illustrate the hardware and software interchangeability, the constitution and steps of each example have been generally described in terms of functionality in the above description. Whether these functions are implemented in hardware or software, depends on the specific application and design constraints of the technical solution. The skilled technician may use different methods to implement the described functions for each particular application, but such implementations should not be considered to be beyond the scope of the present disclosure.

The steps of a method or algorithms described in combination with the embodiments disclosed herein may be implemented with hardware, a software module executed by a processor, or a combination thereof. The software modules may be placed in random access memory (RAM), memory, read only memory (ROM), electrically programmable ROM, electrically erasable programmable ROM, registers, hard disks, removable disks, CD-ROM, or any other form of storage medium well known in the art.

The above-mentioned specific embodiments further detailed illustrate the purposes, technical schemes and advantages of the present disclosure, and it should be understood that the above are only specific implementations of the present disclosure, and are not to limit the protection scope of the present disclosure. Any modification, substitution to same object, improvement and the like made within the spirit and principle of the present disclosure, should be included in the protection scope of the present disclosure.

## Claims

1. A bank card transfer payment method, **characterized in that**, the method comprising:
connecting a first terminal to a first device via a first wireless interface; connecting a second terminal to a second device via a second wireless interface; wherein, the first device comprises account information about a payment account, and the second terminal comprises account information about a payee account;
acquiring the account information about the payment account via the first terminal, acquiring the account information about the payee account via the second terminal, and sending the account information about the payee account to the first terminal;
receiving a transfer instruction input by a first user via the first terminal; the transfer instruction comprises a transfer amount to be transferred to the payee account;
generating transaction information according to the transfer instruction via the first terminal, and sending the transaction information to the first device; the transaction information comprises the account information about the payee account and the transfer amount;
displaying the transaction information to the first user via the first device;
receiving a confirmation instruction input by the first user according to the displayed transaction information;
deducting a corresponding amount in the payment account according to the transfer amount via the first device, and generating a signature information according to the transaction information and sending the signature information to the first terminal via the first device;
receiving the signature information via the first terminal, and forwarding the signature information to the second terminal;
sending the signature information to the second device via the second terminal;
verifying the signature information via the second device;
adding the corresponding amount to the payee account when the verification succeeds.

2. The method according to claim 1, **characterized in that**, the method further comprising:
after deducting the corresponding amount in the payment account according to the transfer amount via the first device, generating the signature information according to the transaction information and sending the signature information to the first terminal via the first device, forwarding the signature information to a first server via the first terminal;
verifying the signature information via the first server;
generating a credit for load instruction information about a second user according to the signature information via the first server, and sending the credit for load instruction information to the first terminal, when the verification succeeds;
forwarding the received credit for load instruction information to the second terminal via the first terminal;
receiving the credit for load instruction information and forwarding the credit for load instruction information to the second device via the second terminal;
adding the corresponding amount to the payee account according to the credit for load instruction information via the second device.

3. The method according to claim 1, **characterized in that**, the method further comprising: after receiving the signature information via the first terminal, and forwarding the signature information to the second terminal,
sending the signature information to a second server via the second terminal; verifying the signature information via the second server;
adding the corresponding amount to the payee account according to the signature information via the second server, when the verification succeeds.

4. The method according to claim 1, **characterized in that**, the method further comprising:
generating a transaction completion information via the second device, and sending the transaction completion information to the second terminal, to display the transaction completion information to a second user via the second terminal.

5. A bank card transfer payment method, **characterized in that**, the method comprising:
connecting a first device to a second device via a wireless interface; wherein, the first device comprises account information about a payment account, and the second terminal comprises account information about a payee account;
receiving a transfer instruction input by a first user via the first device; the transfer instruction comprises a transfer amount to be transferred to the payee account;
sending the account information about the payee account to the first device via the second device;
generating transaction information according to the transfer instruction via the first device, and displaying the transaction information to the first user; the transaction information comprises the account information about the payee account and the transfer amount;
receiving, via the first device, a confirmation instruction input by the first user according to the displayed transaction information;
deducting a corresponding amount in the payment account according to the transfer amount via the first device, and generating a signature information; the signature information comprises the transfer amount;
sending the signature information to the second device via the first device;
adding the corresponding amount to the payee account according to the signature information via the second device.

6. The method according to claim 5, **characterized in that**, the method further comprising:
generating transaction completion information via the second device, and displaying the transaction completion information to a second user.

7. A bank card transfer payment system, **characterized in that**, the system comprising:
a first terminal, a second terminal, a first device, and a second device;
the first terminal is used for connecting to the first device via a first wireless interface, wherein, the first device comprises account information about a payment account; and, is used for acquiring the account information about the payment account;
the second terminal is used for connecting to the second device via a second wireless interface, wherein, the second device comprises account information about a payee account; and, is used for acquiring the account information about the payee account, and sending the account information about the payee account to the first terminal;
the first terminal is further used for receiving a transfer instruction input by a user, the transfer instruction comprising a transfer amount to be transferred to the payee account; for generating transaction information according to the transfer instruction and sending the transaction information to the first device, the transaction information comprising the account information about the payee account and the transfer amount;
the first device is used for displaying the transaction information to the first user; receiving a confirmation instruction input by the first user according to the displayed transaction information; deducting a corresponding amount in the payment account according to the transfer amount, generating a signature information according to the transaction information and sending the signature information to the first terminal;
the first terminal is further used for receiving the signature information, and forwarding the signature information to the second terminal;
the second terminal is further used for sending the signature information to the second device;
the second device is used for verifying the signature information; and adding the corresponding amount to the payee account when the verification succeeds.

8. The system according to claim 7, **characterized in that**, the system further comprising: a first server, which is used for receiving the signature information forwarded by the first terminal after the first device deducting the corresponding amount in the payment account according to the transfer amount, generating the signature information according to the transaction information and sending the signature information to the first terminal; and for verifying the signature information; and for generating credit for load instruction information about a second user according to the signature information, and send the credit for load instruction information to the first terminal, when the verification succeeds;
the first terminal is further used for forwarding the received credit for load instruction information to the second terminal;
the second terminal is further used for receiving the credit for load instruction information and forwarding the credit for load instruction information to the second device;
the second device is further used for adding the corresponding amount to the payee account according to the credit for load instruction information.

9. The system according to claim 7, **characterized in that**, the system further comprising: a second server, which is used for receiving the signature information sent by the second terminal after the first terminal receiving the signature information and forwarding the signature information to the second terminal; and for verifying the signature information; and for adding the corresponding amount to the payee account according to the signature information, when the verification succeeds.

10. The system according to claim 7, **characterized in that**, the second device is further used for generating a transaction completion information, and sending the transaction completion information to the second terminal to display the transaction completion information to a second user via the second terminal.

11. A bank card transfer payment system, **characterized in that**, the system comprising: a first device, and a second device;
the first device is used for connecting to the second device via a wireless interface; wherein, the first device comprises account information about a payment account, and the second terminal comprises account information about a payee account;
the first device is further used for receiving a transfer instruction input by a first user; the transfer instruction comprises a transfer amount to be transferred to the payee account;
the second device is further used for sending the account information about the payee account to the first device;
the first device is further used for generating transaction information according to the transfer instruction, and displaying the transaction information to the first user; the transaction information comprises the account information about the payee account and the transfer amount;
the first device is further used for receiving a confirmation instruction input by the first user according to the displayed transaction information; deducting a corresponding amount in the payment account according to the transfer amount, and generating a signature information; the signature information comprises the transfer amount;
the first device is further used for sending the signature information to the second device;
the second device is further used for adding the corresponding amount to the payee account according to the signature information.

12. The system according to claim 11, **characterized in that**, the second device specifically is used for generating a transaction completion information, and displaying the transaction completion information to a second user.
